# FASCICULE DE BREVET EUROPEEN

(11) **EP 4 221 964 B1**
(45) Date de publication et mention de la délivrance du brevet: **29.01.2025**
(21) Numéro de dépôt: 21798747.8
(22) Date de dépôt: 30.09.2021
(51) Int. Cl.: B29C 73/02, B29C 73/16

(54) **PROCEDE DE REPARATION DE FUITE EN FOND DE CONTENANT COMPRENANT UNE OBTURATION REVERSIBLE DE LA FUITE**
VERFAHREN ZUR REPARATUR EINES LECKS AM BODEN EINES BEHÄLTERS MIT UMKEHRBARER ABDICHTUNG DES LECKS
METHOD FOR REPAIRING A LEAK AT THE BOTTOM OF A CONTAINER COMPRISING A REVERSIBLE SEALING OF THE LEAK

(30) Priorité: 02.10.2020 FR 2010089
(43) Date de publication de la demande: 09.08.2023
(73) Titulaire: BOUYGUES CONSTRUCTION EXPERTISES NUCLEAIRES, 78280 MONTIGNY LE BRETONNEUX (FR)
(72) Inventeur: LEMAIRE, Olivier, 92160 ANTONY (FR)
(74) Mandataire: Regimbeau
(86) Numéro de dépôt international: PCT/FR2021/051693
(87) Numéro de publication internationale: WO 2022/069840

(56) Documents cités:
- EP-A1- 1 439 053
- EP-A1- 1 510 329
- US-A- 4 874 445
- US-A- 5 149 395
- US-A1- 2003 047 268
- US-A1- 2018 236 824

## Description

### Domaine technique

La présente invention se rapporte à la gestion d'un contenu liquide stocké dans un contenant, et plus précisément concerne un procédé de réparation de fuite causée par un orifice au fond d'un contenant avec un contenu liquide.

### Arrière-plan technologique

Une grande variété de contenants sont utilisés pour stocker des contenus liquides. Par exemple, des cuves, des citernes, des réservoirs, des bassins ou des piscines peuvent contenir de l'eau, des effluents liquides ou tout autre contenu liquide. Un contenant est défini par une enceinte étanche au contenu liquide, comprenant au moins une paroi retenant ledit contenu liquide. Chaque contenant a un fond, défini par la direction de la gravité terrestre s'exerçant sur le contenu liquide. Le fond peut ne pas être plat, et peut ne pas être perpendiculaire à la direction de la gravité terrestre. Le fond correspond néanmoins à une zone de l'enceinte contre laquelle s'appliquera, éventuellement transitoirement, un fluide de densité supérieure à celle du liquide contenu dans le contenant.

Comme tout dispositif, un tel contenant est soumis à des contraintes mécaniques et à un vieillissement pouvant entraîner l'apparition d'orifices tels que des trous ou des fissures. Ces orifices rompent l'étanchéité de l'enceinte et peuvent causer des fuites du contenu liquide hors du contenant. Il est donc nécessaire de procéder au plus vite à la réparation de la fuite, en rebouchant l'orifice causant la fuite pour rétablir l'étanchéité de l'enceinte du contenant afin d'empêcher la perte du contenu liquide.

Avec les méthodes antérieures, soit la réparation de la fuite nécessite de vider au plus vite le contenant, exposant à l'air l'orifice à reboucher, soit le rebouchage se fait par le déversement d'un produit (par exemple du béton ou du polyuréthane) en quantité importante de sorte à recouvrir le fond du contenant

Dans le premier cas, une fois le contenant vidé, un opérateur se rend alors à l'endroit de l'orifice, et rebouche l'orifice, typiquement en appliquant un matériau de rebouchage sur l'orifice, apte à assurer un rétablissement définitif et pérenne de l'étanchéité du contenant. Le rebouchage de l'orifice peut par exemple être une soudure ou un enduit d'étanchéité. Il s'agit d'une procédure longue à mettre en œuvre, et tout retard pris dans la réparation de la fuite augmente la quantité de contenu liquide qui s'échappe par ladite fuite.

Dans le second cas, le contenant se retrouve dégradé, avec notamment un état de surface de son fond sensiblement modifié et une variation du volume du contenant. Bien que la fuite ait été stoppée, il peut être envisagé de retirer le produit déversé qui recouvre le fond du contenant afin d'accéder à l'orifice et de le reboucher proprement. Toutefois, retirer le produit déversé nécessite des agents agressifs chimiques ou mécaniques avec un risque important d'altération de la surface du contenant. En effet, les produits déversés altèrent la surface sur laquelle ils se trouvent, et adhèrent à cette surface. Par exemple, lorsque du béton est déversé, il est nécessaire de briser celui-ci, puis de gratter pour le retirer du fond. Dans tous les cas, le retrait du produit déversé se traduit par une dégradation du fond du contenant pouvant entraîner la nécessité de son remplacement.

Par ailleurs, la présence de la fuite fait revêtir un caractère urgent à toutes ces opérations. Or, la fonction du contenant est justement de stocker du contenu liquide, et il peut ne pas exister de stockage alternatif immédiatement disponible permettant d'y entreposer le contenu liquide à évacuer du contenant. En outre, le volume de contenu liquide peut être important dans le cas d'un contenant de grande capacité, et il est possible que la vidange d'un tel contenant soit très longue.

Il résulte de ces inconvénients qu'un orifice, même de faible taille, peut entraîner une perte du contenu liquide significative ou le répandage d'une part non négligeable de ce contenu liquide hors du contenant, faute d'un procédé de réparation de la fuite qui permette de stopper de façon simple, rapide et efficace l'écoulement du contenu liquide par la fuite.

Le document US 4 874 445 A divulgue un procédé de réparation de fuite causée par un orifice au fond d'un contenant avec un contenu liquide, ledit contenu liquide présentant une première densité.

### Présentation de l'invention

L'invention a pour but de remédier au moins en partie à ces inconvénients, en permettant d'obturer rapidement et de façon réversible une fuite par un orifice au fond d'un contenant rempli d'un contenu liquide au moyen d'un mélange obturant, d'une façon simple et efficace qui ne nécessite pas d'indisponibilité du contenant, et ne requiert pas de la main d'œuvre importante, préalablement à réparation définitive de la fuite.

A cet effet, il est proposé un procédé de réparation de fuite causée par un orifice au fond d'un contenant avec un contenu liquide, ledit contenu liquide présentant une première densité, le procédé comprenant une obturation réversible de la fuite comprenant les étapes selon lesquelles:
- un mélange obturant est déversé dans le contenu liquide au voisinage de l'orifice, le mélange obturant comprenant un produit obturant et des charges solides et rigides mélangées audit produit obturant, le produit obturant présentant une deuxième densité supérieure à la première densité et ayant la capacité de solidifier au sein du contenu liquide, les charges présentant une troisième densité inférieure à la deuxième densité,
- le mélange obturant s'étale sur le fond du contenant et atteint l'orifice,
- des charges du mélange obturant encombrent l'orifice et permettent au produit obturant de solidifier sur l'orifice sans être entraîné par la fuite du contenu liquide à travers l'orifice, formant une couche obturante pelable sur le fond du contenant étanche au contenu liquide,
le procédé de réparation comprenant ensuite:
- une vidange du contenu liquide du contenant,
- un retrait de la couche obturante effectué en pelant ladite couche obturante,
- une réparation de la fuite.

Le procédé de réparation de fuite proposé prévoit donc une obturation réversible de la fuite préalable à la réparation définitive de la fuite, qui permet d'interrompre très vite l'écoulement de contenu liquide hors du contenant, avant que ne puisse être mis en œuvre la réparation définitive de la fuite, généralement en rebouchant l'orifice.

Le procédé est avantageusement complété par les caractéristiques suivantes, prises seules ou en quelconque de leurs combinaisons techniquement possibles :
- le produit obturant a la capacité de se solidifier sans altération chimique ou mécanique du matériau du fond de contenant au contact dudit produit obturant ;
- la couche obturante est pelée en appliquant une traction sur ladite couche ;
- des charges présentent une plus petite dimension supérieure à 0,5 mm ;
- la troisième densité est inférieure à la première densité ;
- les charges présentent des dimensions variées ;
- les charges présentent une section avec une plus grande dimension supérieure au dixième de la largeur du plus petit rectangle qui contient l'orifice, sur le fond du contenant ;
- le produit obturant est bi-composant, le procédé comprenant une étape de mélange des composants pour obtenir ledit produit obturant ;
- la solidification du produit obturant dans le contenu liquide intervient après au moins 10 minutes et avant 2h à la suite de son déversement dans le contenu liquide.

### Présentation des figures

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :
la figure 1 est une vue schématique montrant le déversement d'un mélange obturant dans le contenu liquide d'un contenant présentant une fuite, selon un mode de réalisation possible de l'invention ;
la figure 2 est une vue schématique montrant le mélange obturant s'étalant au fond du contenant suite à son déversement illustré par la figure 1, selon un mode de réalisation possible de l'invention ;
la figure 3 est une vue schématique montrant le mélange obturant atteignant l'orifice lors de son étalement illustré par la figure 2, selon un mode de réalisation possible de l'invention ;
la figure 4 est une vue schématique montrant des charges du mélange obturant encombrant l'orifice et permettant au produit obturant de se solidifier au droit de l'orifice sans être entraîné par la fuite du contenu liquide à travers l'orifice, selon un mode de réalisation possible de l'invention ;
la figure 5 est une vue schématique montrant un retrait de la couche obturante effectué en pelant cette couche obturante, selon un mode de réalisation possible de l'invention.

### Description détaillée

Comme indiqué plus haut, le procédé de réparation proposé ajoute une obturation réversible de la fuite préalable à la réparation définitive de la fuite par rebouchage de l'orifice. En référence aux figures annexés, il est ici décrit un exemple de mise en œuvre de l'obturation réversible de la fuite. Un contenant 1 contient un contenu liquide 2. La fuite de contenu liquide 2 est causée par un orifice 3 traversant un fond 4 du contenant 1. La fuite se traduit par un écoulement du contenu liquide 2 à travers l'orifice 3, et donc par un flux de fuite de contenu liquide 2 dans le contenant 1 en direction de l'orifice 3 qui est représenté par une flèche dans les figures. Comme indiqué précédemment, le contenant 1 peut être par exemple une cuve, une citerne, un réservoir, un bassin, ou une piscine, et le contenu liquide 2 peut être de l'eau, un produit chimique liquide, des effluents liquides ou tout autre produit liquide. L'orifice 3 peut présenter différentes tailles et formes, malgré sa représentation schématique sur les figures. L'orifice 3 peut ainsi être un trou, une fente, une fissure, une déchirure, etc.

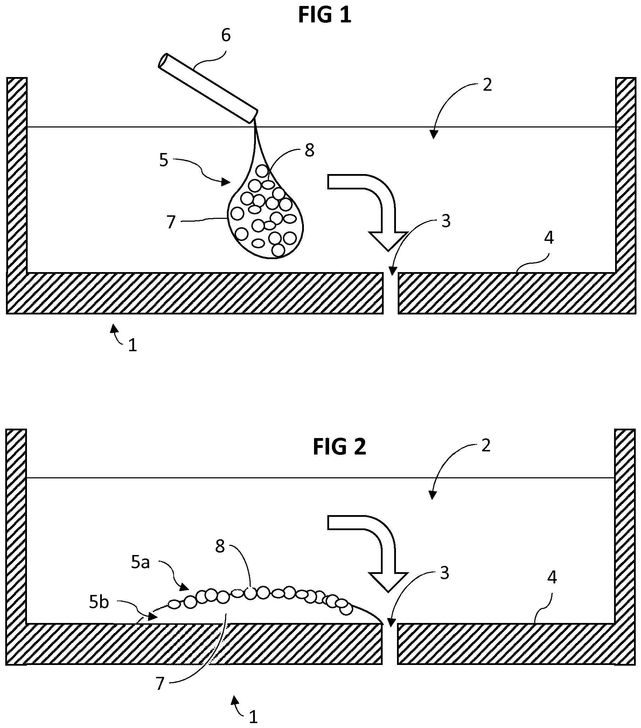

Comme illustré sur la figure 1, un mélange obturant 5 est déversé dans le contenu liquide 2 du contenant 1 au voisinage de l'orifice 3. De préférence, le mélange obturant est déversé au plus près de l'orifice 3, et idéalement au-dessus de l'orifice 3. Il n'est cependant pas nécessaire que le mélange obturant 5 soit déversé exactement au-dessus de l'orifice 3, puisque le mélange obturant 5 s'étale ensuite sur le fond 4 du contenant 1, et donc recouvre une zone qui déborde largement de l'endroit où il a été déversé. Le voisinage de l'orifice 3 est donc entendu comme étant une zone suffisamment proche de l'orifice 3 pour que le mélange obturant 5 atteigne l'orifice 3 lorsque le mélange obturant 5 s'étale sur le fond 4 du contenant 1, avant que la solidification dudit mélange obturant 5 n'empêche cet étalement. L'étendue du voisinage de l'orifice où peut être déversé initialement le mélange obturant 5 dépend donc de plusieurs facteurs, tels que la quantité de mélange obturant 5 déversée, la viscosité du mélange obturant 5, la viscosité du contenu liquide 2, la taille de l'orifice 3 qui influe sur le flux de fuite, une éventuelle pente du fond 4 du contenant 1, etc. Par ailleurs, le déversement de mélange obturant 5 peut ne pas être ponctuel, mais s'étendre sur une certaine surface correspondant à une zone de fond 4 du contenant 1, élargissant d'autant l'étendue du voisinage de l'orifice 3.

Il n'est donc pas nécessaire de connaître l'emplacement de l'orifice 3. Il suffit d'identifier la zone de la fuite, par exemple en identifiant par l'extérieur la présence d'une fuite dans une zone donnée. Il est même possible, lorsque le fond 4 du contenant 1 n'est pas trop étendu au regard des capacités d'étalement du mélange obturant 5, de se contenter de déverser le mélange obturant 5 sans avoir identifier au préalable l'emplacement de la fuite, le mélange obturant 5 recouvrant alors le fond 4 du contenant 1.

Comme illustré, le mélange obturant 5 peut être déversé en-dehors du contenu liquide, par déversement direct sans outil ou à partir d'un outil 6 de déversement tel qu'un pistolet distributeur à cartouche, un ou plusieurs tubes, etc. Cette approche présente l'avantage d'être plus aisée à mettre en œuvre, ne requérant pas d'outil 6 de déversement submersible, et avec un déversement facilité du fait qu'il se déroule dans l'air plutôt que dans le contenu liquide 2, de densité supérieure. Il est toutefois possible de déverser le mélange obturant 5 à l'intérieur du contenu liquide 2, par exemple en immergeant au moins une partie de l'outil 6 de déversement qui déverse le mélange obturant 5. Cette approche peut permettre d'approcher au plus près l'orifice 3, afin de limiter la quantité de mélange obturant 5 déversé, ou plus simplement peut être imposée par la configuration du contenant 1 et l'emplacement de l'orifice 3.

Le mélange obturant 5 comprend un produit obturant 7 et des charges 8 solides mélangées audit produit obturant 7. Les charges 8 sont solides, en ce qu'elles conservent leur état solide dans le produit obturant 7 et dans le contenu liquide 2, n'y étant pas miscibles, et sont rigides, en ce qu'elles conservent leur forme dans le mélange obturant 7 et le contenu liquide 2. Les charges 8 sont enrobées de produit obturant 7. Alors que le contenu liquide 2 présente une première densité, le produit obturant 7 présentant une deuxième densité supérieure à la première densité.

Le produit obturant 7 présente la capacité de solidifier au sein du contenu liquide 2, c'est-à-dire sans nécessité d'être exposé à l'air libre. Le produit obturant 7 est apte à se solidifier à température ambiante (comme par exemple entre 10 et 30°C), sans nécessiter de chauffage. En outre, le produit obturant 7 est choisi afin de pouvoir former une couche pelable sur le fond du contenant 1 une fois ledit produit obturant 7 solidifié. Cette couche est pelable en ce qu'elle présente la propriété de pouvoir être détachée de la surface du fond du contenant 1 sur laquelle elle s'est solidifiée en appliquant une traction sur ladite couche, sans nécessiter de rompre ladite couche et sans requérir de produit chimique additionnel tel qu'un solvant. Typiquement, ce caractère pelable vient de la capacité du produit obturant 7 à se solidifier sans altération chimique ou mécanique du matériau du fond de contenant 1 au contact dudit produit obturant 7. Intrinsèquement, le produit obturant 7 n'adhère pas à la surface du fond du contenant 1 sur laquelle il se solidifie. Cette couche de produit obturant 7 solidifié est étanche au contenu liquide 2. De préférence, le produit obturant 7 solidifié présente une souplesse propre à assurer un plaquage étanche au contenu liquide 2 d'une couche de produit obturant 7 sur une surface plane.

Le produit obturant 7 comprend de préférence majoritairement un produit polymère, et est de préférence un bi-composant, obtenu en mélangeant deux composant une résine. Un tel mélange permet de causer la polymérisation intrinsèque du produit obturant 7, et donc sa solidification, même en immersion dans le contenu liquide 2. Le produit obturant 7 peut notamment être un silicone bi-composant par addition, et peut en particulier être un silicone à vulcanisation à température ambiante ou silicone RTV pour l'anglais "room temperature vulcanisation". Bien entendu, d'autres types de produit obturant 7 peuvent être utilisés, dès lors que ces produits obturants 7 présentent les caractéristiques mentionnées ci-dessus. Outre les contraintes de densité, le choix du produit obturant 7 dépend notamment de la nature du contenu liquide 2, puisque le produit obturant 7 doit être compatible avec le contenu liquide 2, et doit notamment être apte à se solidifier en son sein. Le choix du produit obturant 7 dépend également du matériau en fond d'un contenant 1 car il doit y former une couche pelable.

En fonction du produit obturant 7, la solidification peut être une polymérisation, une vulcanisation, une prise, ou tout autre réaction chimique permettant de passer d'un produit obturant apte à s'étaler en fond de contenant 1 à un produit obturant apte à sceller l'orifice 3. La durée requise pour que le produit obturant 7 se solidifie dépend de la durée considérée comme nécessaire pour que le mélange obturant 5 s'étale sur le fond 4 du contenant 1 au-dessus de l'orifice 3. La solidification doit intervenir suffisamment tardivement pour que le mélange obturant 5 atteigne l'orifice 3 et pénètre dans celui-ci, mais ne doit pas être inutilement long, au risque d'augmenter la durée du procédé sans raison. De préférence, la solidification du produit obturant 7 intervient après au moins 10 minutes, et de préférence après au moins 20 minutes à la suite du déversement. De préférence, la solidification du produit obturant 7 intervient avant 6h, et de préférence avant 4h à la suite du déversement. D'autres durées peuvent être envisagées.

Les charges 8 sont des particules solides de petite taille, dont la plus grande dimension est typiquement inférieure ou égale à 20 mm. Bien que par soucis de simplicité et de clarté les charges 8 apparaissent sur les figures annexées avec une forme régulière, et plus particulièrement une forme de solide de révolution, comme une boule, ou ovoïde, comme une forme ovale, les charges 8 peuvent avoir des formes variées, mais présentent de préférence des formes irrégulières non lisses, par exemple avec des arrêtes, et de préférence des formes complexes permettant auxdites charges 8 de s'emboîter les unes dans les autres. Le matériau des charges 8 est choisi pour rester solide dans le mélange obturant 5 et dans le contenu liquide 2, et pour présenter une troisième densité inférieure à la deuxième densité, voire inférieure à la première densité. De préférence, la troisième densité est inférieure à 80 % de la deuxième densité. Selon un exemple préférentiel, les charges sont en plastique, qui combine l'avantage de la faible densité, de l'imputrescibilité, du faible coût, et de la facilité d'en contrôler les formes et dimensions. D'autres matériaux peuvent toutefois être envisagés, dès lors qu'ils permettent d'obtenir une faible densité et présentent des propriétés adaptées de tenue mécanique et de durabilité.

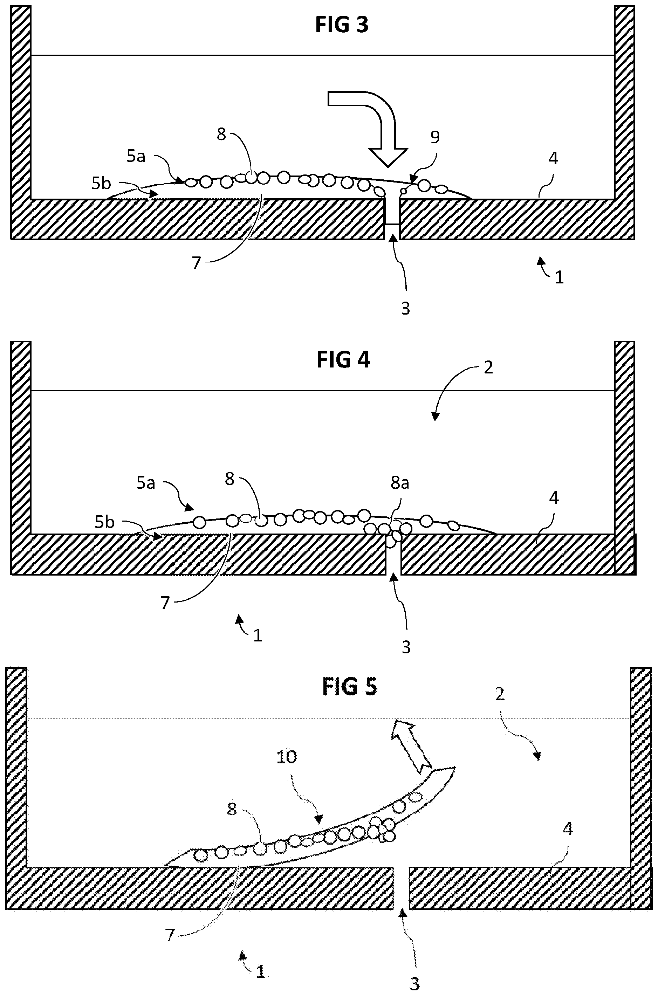

Suite au déversement du mélange obturant 5 dans le contenu liquide 2, celui-ci s'étale sur le fond 4 du contenant 1 au-dessus de l'orifice 3. Comme illustré sur la **figure 2****,** le mélange obturant 5 peut ne pas se trouver immédiatement au-dessus de l'orifice 3, mais peut plutôt s'étaler d'abord à proximité dudit orifice 3, en fonction de l'endroit où le déversement a eu lieu. Au cours de son étalement, le mélange obturant 5 atteint l'orifice 3, et s'étale donc au niveau de l'orifice 3, comme illustré sur la **figure 3****.**

L'étalement du mélange obturant 5 sur le fond 4 est notamment possible car la deuxième densité, celle du produit obturant 7, est supérieure à la première densité, celle du contenu liquide 2. Bien que les charges 8 présentent une troisième densité inférieure à la deuxième densité, voire inférieure à la première densité, les charges 8 présentes dans le mélange obturant 5 sont enrobées de produit obturant 7, et donc restent dans le mélange obturant 5 sur le fond 4. En revanche, en raison de ces différences de densité, les charges 8 se rassemblent sur la partie supérieure 5a de l'amas de mélange obturant 5, et même plutôt en surface de cet amas, la partie inférieure 5b de l'amas de mélange obturant 5 contenant essentiellement du produit obturant 7.

Il est à noter que l'étalement du mélange obturant 5 se fait préférentiellement en direction de l'orifice 3. En raison de la fuite, il existe un flux de fuite de contenu liquide 2 en direction de l'orifice 3, qui entraîne de façon similaire le mélange obturant 5 en direction de l'orifice 3. La présence même de la fuite fait que le mélange obturant 5 arrive à l'orifice 3.

La fuite se traduit par un cône de fuite 9 du liquide contenu qui empêche le produit obturant 7 de se stabiliser sur l'orifice 3 pour se solidifier et ainsi colmater la fuite. En revanche, les charges 8, qui surnagent sur le produit obturant 7 en partie supérieure 5a de l'amas de mélange obturant 5, sont entraînées par le cône de fuite 9 dans l'orifice 3. Si la troisième densité était trop haute, par exemple supérieure ou égale à la deuxième densité, les charges 8 ne seraient pas entraînées par la fuite. C'est pour cette raison que la troisième densité est inférieure à la deuxième densité, et de préférence est inférieure à la première densité.

Puisque les charges 8 sont solides et présentent une section non négligeable par rapport à la taille de l'orifice 3, ces charges 8 coopèrent entre elles et avec les parois de l'orifice 3, et finissent par encombrer l'orifice 3, c'est-à-dire à former un engorgement 8a de la section de cet orifice 3, comme dans l'exemple de la **figure 4****.** Dans cet exemple, l'encombrement par les charges 8 apparaît à l'entrée de l'orifice 3. Cet engorgement 8a pourrait cependant apparaître plus profondément dans l'orifice 3, notamment en fonction de la géométrie de l'orifice 3, et en particulier de sa section, dans un sens d'écoulement de la fuite, ou de la taille et de la forme des charges 8.

Le bon encombrement de l'orifice 3 par les charges 8 est d'abord assuré par leur caractère solide et rigide propre à assurer une tenue mécanique suffisante pour encombrer l'orifice 3. L'encombrement est également assuré par la forme irrégulière des charges 8. L'encombrement de l'orifice 3 est également assuré par une taille suffisante d'au moins certaines des charges 8, celles-ci présentant de préférence une plus petite dimension (typiquement perpendiculaire à leur plus grande dimension) supérieure à 0,5 mm, et de préférence supérieure à 1 mm. Par exemple, des charges 8 présentent une section avec une plus grande dimension comprise entre 0,5 mm et 20 mm. Certaines charges 8 doivent être d'autant plus grosses que leur forme est lisse. En particulier pour le cas de charges 8 présentant une forme de solide de révolution, il est préférable qu'aux moins certaines des charges 8 présentent une section avec une plus grande dimension (par exemple un diamètre) supérieure au dixième (de préférence supérieure au quart ou à la moitié) de la largeur du plus petit rectangle qui contient l'orifice (sur le fond d'un contenant, au niveau de l'embouchure de l'orifice dans l'espace intérieur du contenant 1). Dans la mesure où la plus grande dimension de la section de l'orifice 3 n'est généralement pas connue avec précision, la présence de charges 8 avec des dimensions variées permet au mélange obturant 5 d'être adapté pour obturer des fuites causées par des orifices 3 de différentes tailles.

L'encombrement de l'orifice 3 par les charges 8 permet de limiter drastiquement le flux de fuite à travers l'orifice 3, sans toutefois colmater la fuite et donc interrompre totalement ce flux de fuite. Le flux de fuite est cependant suffisamment limité par l'encombrement pour que du produit obturant 7 puisse reposer sur l'orifice 3 suffisamment longtemps pour se solidifier. De fait, le produit obturant 7 compense l'éventuelle fuite rémanente suite à l'encombrement de l'orifice 3 par les charges 8, d'autant plus que la viscosité du produit obturant 7 est importante. L'encombrement par les charges 8 permet alors au produit obturant 7 de se solidifier au droit de l'orifice 3 sans être entraîné par la fuite du contenu liquide 2 à travers l'orifice 3. Après la solidification, la fuite est alors obturée de façon réversible par une couche obturante 10 constituée du mélange obturant 5 comprenant des charges 8 prises dans un produit obturant 7 solidifié.

Au vu de ce qui précède, il apparaît que les caractéristiques que doivent présenter le produit obturant 7 et les charges 8 sont celles qui permettent de mettre en œuvre le procédé de manière satisfaisante, étant rappelé les contraintes auxquelles doit répondre le produit obturant en termes de densité, de capacité de se solidifier dans le contenu liquide 2, et la propriété de former une couche pelable sur le fond 4 du contenant 1.

Par la présence du produit obturant 7 solidifié, la couche obturante 10 forme une couche pelable sur le fond 4 du contenant 1. Cette couche obturante 10 est étanche au contenu liquide 2. Outre la densité plus importante du produit obturant 7 par rapport à celle du contenu liquide 2, le maintien en place de la couche obturante 10 est assuré par un effet ventouse qui plaque la couche obturante 10 contre le fond 4 du contenant 1. Le maintien en place de la couche obturante 10 n'est pas lié à une quelconque altération, mécanique ou chimique, de la surface du fond 4 du contenant 1 qui assurerait une adhérence entre la couche obturante 10 et le fond 4 du contenant 1.

Une fois que la fuite a été obturée de façon réversible par la couche obturante formée du mélange obturant 5 comprenant des charges 8 prises dans un produit obturant 7 solidifié, la perte de contenu liquide est stoppée.

Il est alors possible de procéder à la réparer du contenant 1 sans le caractère d'urgence que présentait la nécessité de stopper l'écoulement de contenu liquide 2 à travers la fuite. Il est alors possible de mettre en œuvre plus tard la suite du procédé de réparation, par exemple plusieurs jours plus tard, quand ont été réunies les conditions propices à la réparation définitive, i.e. irréversible et permanente, de la fuite. Il est alors possible de vider le contenant 1 de son contenu liquide de façon programmée, afin de mettre en place une solution de réparation permanente dudit contenant 1. La vidange du contenu liquide 2 du contenant 1 permet de mettre à jour la couche obturante 10 pour la retirer, et permet d'éviter un nouvel écoulement du contenu liquide 2 à travers la fuite.

La couche obturante 10 est alors retirée en pelant ladite couche obturante 10. Comme la couche obturante 10 est pelable, elle peut être retirée sans recours à des produits chimiques quelconque, et sans nécessiter de briser cette couche obturante 10. Dans la mesure où la couche obturante 10 n'adhère pas au fond 4 du contenant 1 par une coopération chimique ou mécanique, il suffit d'exercer une traction, de préférence au moins partiellement vers le haut, sur ladite couche obturante 10 pour retirer celle-ci. Il n'est pas nécessaire de procéder à une autre action. Comme illustré sur la Figure 5 par une flèche, il est possible de saisir la couche obturante 10 par un bord, et de la soulever pour la peler. Il est alors possible de retirer la couche obturante 10 sans rupture de celle-ci.

Une fois retirée la couche obturante 10 qui assurait l'obturation réversible, l'orifice 3 n'est plus obturé, et est accessible pour être rebouché afin de réparer la fuite. La fuite peut être réparée par des solutions classiques, qui dépendent de la nature du contenant 1, afin de retrouver une étanchéité satisfaisante. Généralement, la réparation de la fuite comprend un rebouchage de l'orifice 3, apte à assurer un rétablissement définitif et pérenne de l'étanchéité du contenant 1. Le rebouchage de l'orifice 3 peut par exemple être une soudure ou l'application d'un enduit d'étanchéité. Afin d'assurer ce rétablissement définitif et pérenne de l'étanchéité, le rebouchage de l'orifice 3 peut cette fois impliquer une altération chimique ou mécanique de l'enceinte du contenant propre à assurer la continuité structurelle entre le matériau de rebouchage et le contenant 1.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1. Procédé de réparation de fuite causée par un orifice (3) au fond d'un contenant (1) avec un contenu liquide (2), ledit contenu liquide (2) présentant une première densité, le procédé comprenant une obturation réversible de la fuite comprenant les étapes selon lesquelles:
- un mélange obturant (5) est déversé dans le contenu liquide au voisinage de l'orifice, le mélange obturant (5) comprenant un produit obturant (7) et des charges (8) solides et rigides mélangées audit produit obturant (7), le produit obturant (7) présentant une deuxième densité supérieure à la première densité et ayant la capacité de solidifier au sein du contenu liquide (2), les charges présentant une troisième densité inférieure à la deuxième densité,
- le mélange obturant (5) s'étale sur le fond (4) du contenant (1) et atteint l'orifice (3),
- des charges (8) du mélange obturant (5) encombrent l'orifice (3) et permettent au produit obturant (7) de solidifier sur l'orifice sans être entraîné par la fuite du contenu liquide à travers l'orifice, formant une couche obturante pelable sur le fond du contenant (1) étanche au contenu liquide (2),
le procédé de réparation comprenant ensuite:
- une vidange du contenu liquide (2) du contenant (1),
- un retrait de la couche obturante (10) effectué en pelant ladite couche obturante,
- une réparation de la fuite.

2. Procédé selon la revendication 1, dans lequel le produit obturant (7) a la capacité de se solidifier sans altération chimique ou mécanique du matériau du fond (4) de contenant (1) au contact dudit produit obturant (7).

3. Procédé selon l'une des revendications 1 ou 2, dans lequel la couche obturante (10) est pelée en exerçant une traction sur ladite couche obturante.

4. Procédé selon l'une des revendications 1 à 3, dans lequel des charges présentent une plus petite dimension supérieure à 0,5 mm.

5. Procédé selon l'une des revendications 1 à 4, dans lequel la troisième densité est inférieure à la première densité.

6. Procédé selon l'une des revendications 1 à 5, dans lequel les charges (8) présentent des dimensions variées.

7. Procédé selon l'une des revendications 1 à 6, dans lequel les charges (8) présentent une section avec une plus grande dimension supérieure au dixième de la largeur du plus petit rectangle qui contient l'orifice (3), sur le fond du contenant (1).

8. Procédé selon l'une des revendications 1 à 7, dans lequel le produit obturant (7) est bi-composant, le procédé comprenant une étape de mélange des composants pour obtenir ledit produit obturant.

9. Procédé selon l'une des revendications 1 à 8, dans lequel la solidification du produit obturant (7) dans le contenu liquide intervient après au moins 10 minutes et avant 2h à la suite de son déversement dans le contenu liquide.

## Patentansprüche

1. Verfahren zur Reparatur eines Lecks, das durch eine Öffnung (3) am Boden eines Behälters (1) mit einem flüssigen Inhalt (2) verursacht wird, wobei der flüssige Inhalt (2) eine erste Dichte aufweist, wobei das Verfahren eine reversible Abdichtung des Lecks umfasst, die die folgenden Schritte umfasst:
- eine Verschlussmischung (5) in den flüssigen Inhalt in der Nähe der Öffnung verschüttet wird, wobei die Verschlussmischung (5) ein Verschlussmittel (7) und feste und starre Füllstoffe (8) umfasst, die mit dem Verschlussmittel (7) vermischt sind, wobei das Verschlussmittel (7) eine zweite Dichte aufweist, die größer als die erste Dichte ist, und die Fähigkeit hat, sich innerhalb des flüssigen Inhalts (2) zu verfestigen, wobei die Füllstoffe eine dritte Dichte aufweisen, die geringer als die zweite Dichte ist,
- die verschließende Mischung (5) sich auf dem Boden (4) des Behälters (1) ausbreitet und die Öffnung (3) erreicht,
- Füllstoffe (8) der Verschlussmischung (5) die Öffnung (3) verstopfen und dem Verschlussmittel (7) ermöglichen, sich an der Öffnung zu verfestigen, ohne durch das Auslaufen des flüssigen Inhalts durch die Öffnung mitgerissen zu werden, wodurch eine abschälbare Verschlussschicht auf dem Boden des Behälters (1) gebildet wird, die undurchlässig für den flüssigen Inhalt (2) ist ,
wobei das Reparaturverfahren dann Folgendes umfasst:
- ein Entleeren des flüssigen Inhalts (2) aus dem Behälter (1),
- eine Entfernung der Verschlussschicht (10), die durch Abschälen der Verschlussschicht erfolgt,
- eine Reparatur des Lecks.

2. Verfahren nach Anspruch 1, bei dem das Verschlussmittel (7) die Fähigkeit hat, ohne chemische oder mechanische Veränderung des Materials des Bodens (4) des Behälters (1), das mit dem Verschlussmittel (7) in Berührung kommt, sich zu verfestigen.

3. Verfahren nach einem der Ansprüche 1 oder 2, bei dem die Verschlussschicht (10) durch Ausüben von Zug auf die Verschlussschicht abgeschält wird.

4. Verfahren nach einem der Ansprüche 1 bis 3, wobei Füllstoffe eine kleinste Abmessung von mehr als 0,5 mm aufweisen.

5. Verfahren nach einem der Ansprüche 1 bis 4, wobei die dritte Dichte geringer ist als die erste Dichte.

6. Verfahren nach einem der Ansprüche 1 bis 5, wobei die Füllstoffe (8) verschiedene Größen aufweisen.

7. Verfahren nach einem der Ansprüche 1 bis 6, wobei die Füllstoffe (8) einen Querschnitt mit einer größten Abmessung aufweisen, die größer ist als ein Zehntel der Breite des kleinsten Rechtecks, das die Öffnung (3) enthält, auf dem Boden des Behälters (1).

8. Verfahren nach einem der Ansprüche 1 bis 7, wobei das Verschlussmittel (7) zweikomponentig ist, wobei das Verfahren einen Schritt des Mischens der Komponenten umfasst, um das Verschlussmittel zu erhalten.

9. Verfahren nach einem der Ansprüche 1 bis 8, bei dem die Verfestigung des Verschlussmittels (7) in dem flüssigen Inhalt nach mindestens 10 Minuten und vor 2 Stunden im Anschluss an seine Verschüttung in den flüssigen Inhalt stattfindet.

## Claims

1. A method for repairing a leak caused by an opening (3) at the bottom of a container (1) with a liquid content (2), said liquid content (2) having a first density, the method comprising a reversible sealing of the leak comprising the steps according to which:
- a sealing mixture (5) is poured into the liquid content in the vicinity of the opening, the sealing mixture (5) comprising a sealing product (7) and solid and rigid fillers (8) mixed into said sealing product (7), the sealing product (7) having a second density greater than the first density and having the capability to solidify within the liquid content (2), the fillers having a third density lower than the second density,
- the sealing mixture (5) spreads over the bottom (4) of the container (1) and reaches the opening (3),
- fillers (8) of the sealing mixture (5) congests the opening (3) and enable the sealing product (7) to solidify over the opening without being washed away by the leakage of the liquid content through the opening, forming a peelable sealing layer on the bottom of the container (1) impervious to the liquid content (2),
the repair method then comprising:
- emptying the liquid content (2) from the container (1),
- removing the sealing layer (10) by peeling off said sealing layer,
- repairing the leak .

2. The method according to claim 1, wherein the sealing product (7) has the capability to solidify without chemical or mechanical alteration of the material of the bottom (4) of the container (1) in contact with said sealing product (7).

3. The method according to one of claims 1 or 2, wherein the sealing layer (10) is peeled off by exerting a traction on said sealing layer.

4. The method according to one of claims 1 to 3, wherein fillers have a smallest dimension greater than 0.5 mm.

5. The method according to one of claims 1 to 4, wherein the third density is lower than the first density.

6. The method according to one of claims 1 to 5, wherein the fillers (8) have various dimensions.

7. The method according to one of claims 1 to 6, wherein the fillers (8) have a section with a largest dimension greater than one tenth of the width of the smallest rectangle which contains the opening (3), on the bottom of the container (1).

8. The method according to one of claims 1 to 7, wherein the sealing product (7) is two-component, the method comprising a step of mixing the components to obtain said sealing product.

9. The method according to one of claims 1 to 8, wherein the solidification of the sealing product (7) in the liquid content occurs after at least 10 minutes and before 2 hours after pouring it into the liquid content.
